# EUROPEAN PATENT SPECIFICATION

(11) **EP 2 895 039 B1**
(45) Date of publication and mention of the grant of the patent: **08.05.2019**
(21) Application number: 13766436.3
(22) Date of filing: 11.09.2013
(51) Int. Cl.: A47J 31/46

(54) **COFFEE MAKER WATER HEATER**
WASSERERHITZER FÜR KAFFEEMASCHINE
CHAUFFE-EAU POUR UNE CAFETIÈRE

(30) Priority: 11.09.2012 US 201261699533 P
(43) Date of publication of application: 22.07.2015
(73) Proprietor: The Richards Corporation, Sterling, VA 20166 (US)
(72) Inventor: JIMENEZ, Marcos, Charles Town, WV 25414 (US)
(74) Representative: Phillips & Leigh LLP
(86) International application number: PCT/US2013/059183
(87) International publication number: WO 2014/043185

(56) References cited:
- EP-A1- 1 780 451
- EP-A1- 2 077 086
- EP-A1- 2 397 055
- WO-A2-2009/138856
- US-A1- 2005 126 276

## Description

### FIELD OF THE INVENTION

Embodiments of the present invention relate generally to improvements for coffee maker heating and find particular use on-board aircraft or other passenger transport vehicles, where quick heating and reduced power consumption are desirable. Embodiments also relate to improved water level sensing, improved water reservoirs, improved carafe features, and improved valve features. State of the art documents relating to this field are: US2005 / 126 276, EP 2 397 955, WO2009 / 138 856, EP 2 077 086, EP 1 780 451.

### BACKGROUND

Traditional coffee makers either use immersion heating or flow-through heating systems for heating water. For immersion heating in a hot water tank (which may use a pressurized or a non-pressurized tank), water is heated within the tank and then held at the desired temperature until dispensed. Flow-through heating systems generally use a direct heater immersion or heat exchanger in the water path. Sometimes called "demand" or "instant" heating systems, these systems heat water instantly from ambient temperature up to the desired dispensing temperature upon request. Flow-through heating systems are generally desirable for most modern water heating equipment, particularly aircraft equipment, primarily due to weight savings compared with hot water tank systems. The efficiency and compactness of flow-through systems can be advantageous, and these systems also eliminate heat-up and recovery time.

However, one major disadvantage with traditional flow-through systems is that the power required to effectively heat from ambient up to a desired dispensing temperature (usually near boiling) with adequate dispense flow rates limits the use of these systems to either slow running equipment or to installations that require a high electrical load capacity. The electrical current required to operate flow-through heating systems is typically very high because the systems rely on heating the water with only a single pass through the heater.

However, reducing power consumption for aircraft equipment (as well as equipment for other passenger transport vehicles) is a desirable goal in the equipment manufacturing business. For example, more and more airlines are seeking to reduce their on-board power consumption in order to be more fuel efficient, cost-effective, and more environmentally friendly, as well as to provide more power to the consumer in-flight entertainment systems that are increasingly used on-board aircraft. One item of equipment that can be improved to pull less power is the coffee maker/hot water heater systems.

Another problem with some on-board coffee makers is that they can be difficult to clean, particularly the water reservoir area. The present inventors have thus determined ways to design the water reservoir as a removable component that can be cleaned and replaced back into the coffee maker/hot water heater unit.

### BRIEF SUMMARY

Embodiments of the present invention thus provide improved heating methods for use in coffee makers and other beverage makers that use hot water for various beverages and other purposes. These improvements find particular use on-board aircraft or other passenger transport vehicles, where quick heating and reduced power consumption are particularly desirable and beneficial. Further embodiments also relate to improved water level sensing, improved water reservoirs, and improved carafe features.

### BRIEF DESCRIPTION OF THE DRAWINGS

FIG. 1 shows side schematic view of one embodiment of a coffee maker water heater that uses a flow-through water path recirculation system.
FIG. 2 shows a side schematic view of a coffee maker water heater that has a water fill system.
FIG. 3 shows a side schematic view of a coffee maker water heater that has a return line delivering water to a water intake opening.
FIG. 4 shows a schematic of an electrical rendering of the coffee maker water heater of FIGS. 2 and 3.
FIG. 5 shows a front perspective view of one embodiment of a coffee maker employing a coffee maker water heater and having a carafe with a liquid level viewing window.
FIG. 6 shows a side perspective view of a coffee maker water heater system.
FIG. 7 shows an exploded perspective view of a reservoir and its related components.
FIG. 8 shows a side perspective view of a water fill area on the reservoir.
FIG. 9 shows a side perspective view of one embodiment of how water may exit the reservoir.
FIG. 10 shows a side perspective view of one embodiment of a heater assembly.

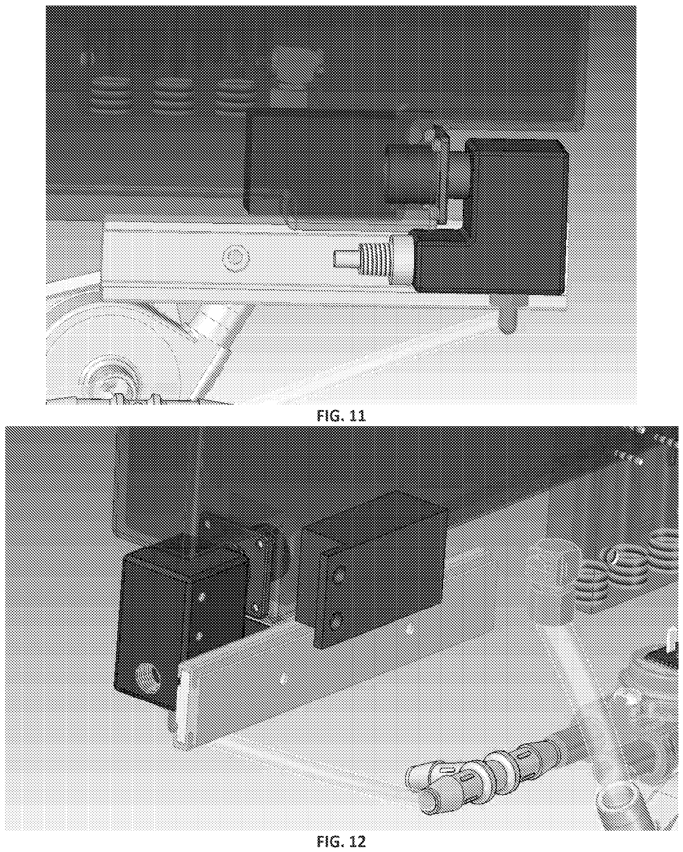

FIG. 11 shows a side perspective view of the reservoir in place in the unit housing, with the valves and sensors in place.
FIG. 12 shows a rear perspective view of the reservoir in place in the unit housing, showing one embodiment for connections of the conduit and a placement of the heater assembly.
FIG. 13 shows an exploded perspective view of one embodiment of a poppet valve.
FIG. 14 shows a top perspective view of various valves that control the flow of water through the system.

### DETAILED DESCRIPTION

Embodiments of this invention thus improve upon traditional flow-through systems by providing the advantages of flow-through heating (e.g., providing hot water upon demand), without the major disadvantage of requiring such a great power consumption and/or by requiring delivery via a slow flow rate. By recirculating water through a flow-through heater and holding that water within the reservoir at a holding temperature (which is generally, but need not always be, below the desired dispensing temperature), it is possible to almost instantly heat the water to near boiling temperature upon request. As the holding temperature nears the desired dispense temperature, there will be reduced benefits to energy loss to the environment as the temperature delta between reservoir and ambient are increased. However, a higher holding temperature may be required for systems that are auto-filling system for extended continuous dispensing with smaller reservoirs.

The systems described herein use significantly lower power requirements, but do not require a slow flow rate. This increases the possibilities for flow-through heating and allows for its use on installations with comparatively lower electrical capacities. For example, some smaller aircraft have lower power requirements and capabilities than larger commercials airliners. Additionally, larger airliners may find the systems described herein useful in order to lower the overall power consumption of the coffee maker/water heaters for any number of reasons, including those described above.

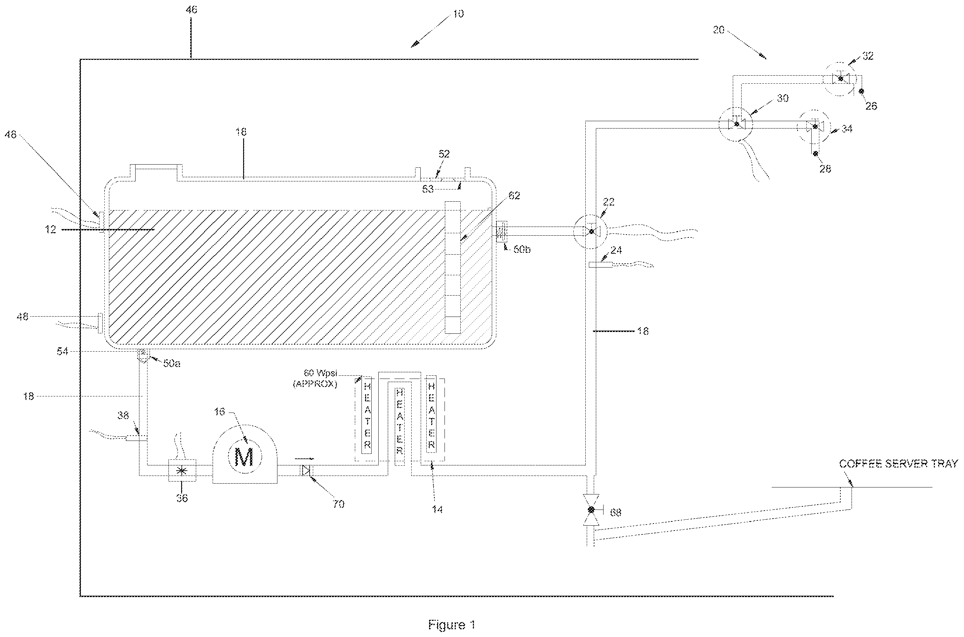

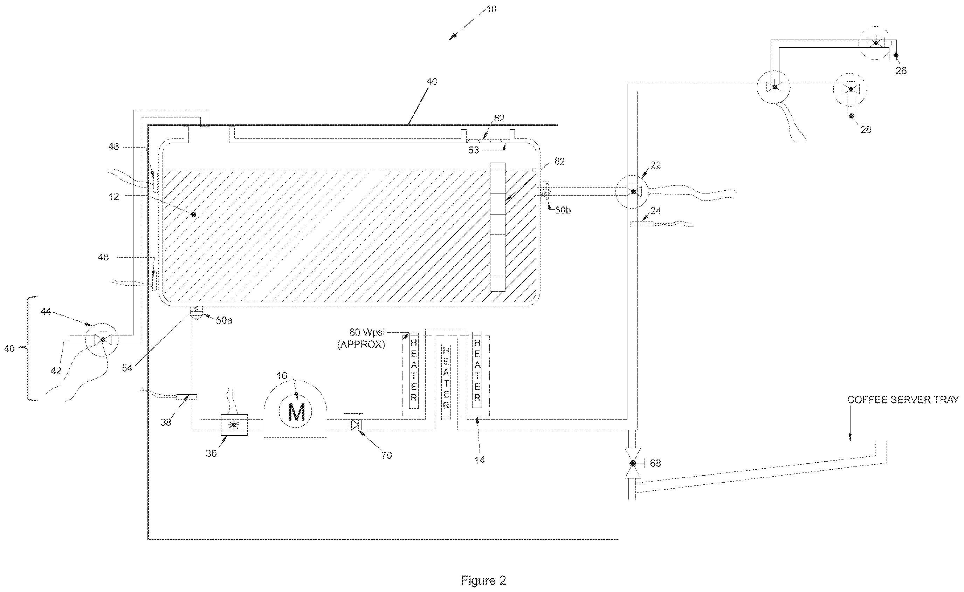

Figure 1 shows one embodiment of a water heating system 10. The system includes a reservoir 12 for holding the water to be heated, a flow-through heater assembly 14, and a pump 16 for moving the water through the system. The system is fluidly connected via various conduits 18, such as tubing or pipes, which may be any appropriate water flow conduit. The reservoir 12 is initially filled with cold or ambient water, either from the pressurized water system of the aircraft (or vehicle) or from a pre-packaged source, such as a bottled water, or water from a faucet or other source. The embodiment showing use with an external water source is illustrated in Figure 1. The embodiment showing use with water being delivered through the pressurized system of the aircraft (but which may also accept water from an external source) is illustrated in Figure 2.

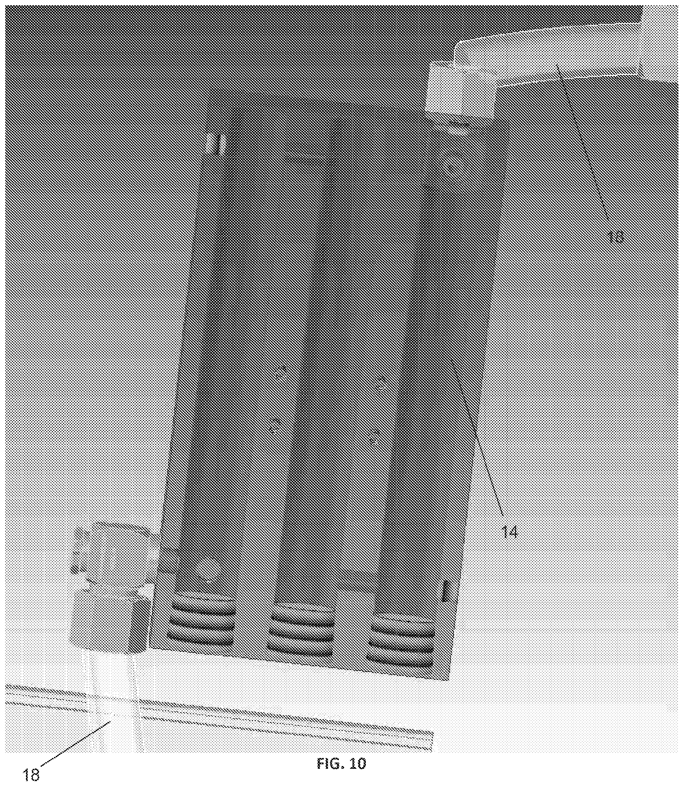

As shown in both figures, the reservoir 12 is fluidly connected to an in-line flow through heater assembly 14. The heater assembly 14 incrementally raises the temperature of the water as it passes through the heater assembly 14. The heater assembly 14 may be any typical flow-through heater assembly that is currently used for coffee maker water heaters (either for use on-board aircraft or for other uses). By incrementally heating the water in the reservoir 12, less instant power is needed to heat the water on its final pass through the system, immediately prior to its use. One example of a potential heater assembly is shown in Figure 10.

A pump 16 is also provided in order to circulate water from the reservoir 12 to the heater 14 and either back to the reservoir 12 or to the appropriate water delivery outlet. The pump may be any typical water pump that is currently used for moving water through aircraft lines or for any other water pump usage. During the warming period (i.e., when water is not needed for dispensing but when the reservoir has been filled to a desired level), the pump routs the water through the conduit 18 to the heater assembly 14 and back to the reservoir 12. As the water circulates through the heating system, the water temperature in the reservoir rises. This allows the water to be heated to the desired final temperature faster upon the final pass-through the system, and with less power consumption required for that final pass. The temperature of the water in the reservoir is raised (due to the water circulation, water being heated and returned to the reservoir) until the desired holding temperature is reached. The desired holding temperature is generally lower than the boiling temperature desired for the water, and may be any desired temperature, for example, in the range of about 54.4°C-76.7°C and more specifically, in the range of about 60°C-71.1°C although the temperature of the holding water may be as high as the ultimate use temperature. In one embodiment, the water is held in the range of about 65.6°C (which may fluctuate as the number of passes increases or stabilizes), and is then passed through the heater for a final dispense temperature of about 86.1°C-92.2°C although the final dispense temperature may be about 93.3°C if the system is set for uses requiring such higher temperatures. The general goal is to save power by keeping the water at a raised temperature, but not as high of the temperature that is desired upon use. By holding the water slightly below the final use temperature but maintaining it at a warmed level, the water is hot enough that it can achieve the desired temperature rise with one final pass through the heater, but requiring a lower power level than required by traditional flow-through systems and without lowering the desired dispensing flow rate.

In one embodiment, the system 10 is able to hold the water at the desired holding temperature and then heat the water to the desired dispensing temperature by using about 1300 watts, but the system may be designed to use as few as 500 watts if desired. (As a general matter, the lower the power provided, the lesser the temperature rise per pass of water that can be achieved. Lower power may also increase reservoir heat-up time. Higher power is also possible, however there are reduced benefits to use of the recirculating system once power is increased, depending on the flow rates desired.)

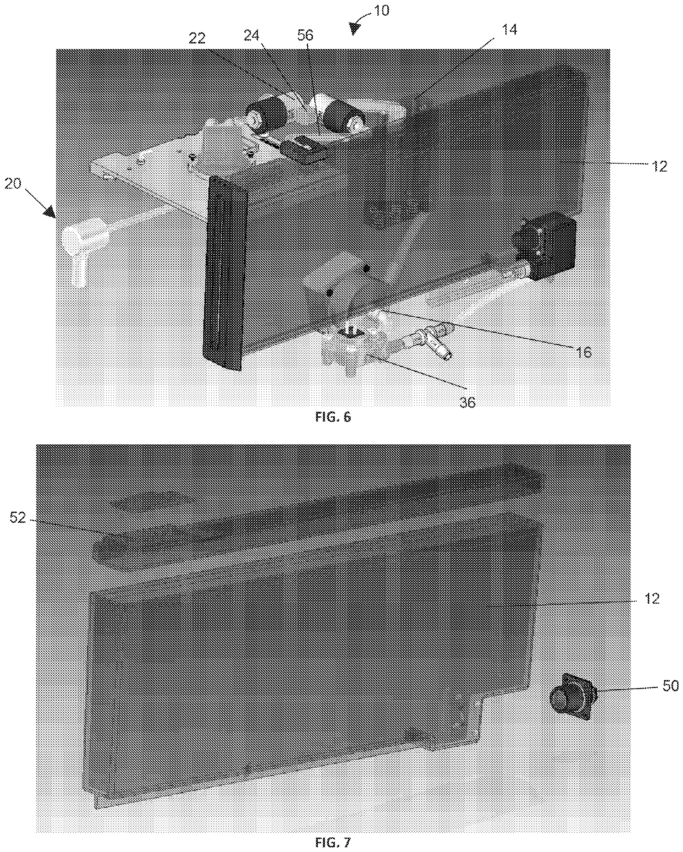

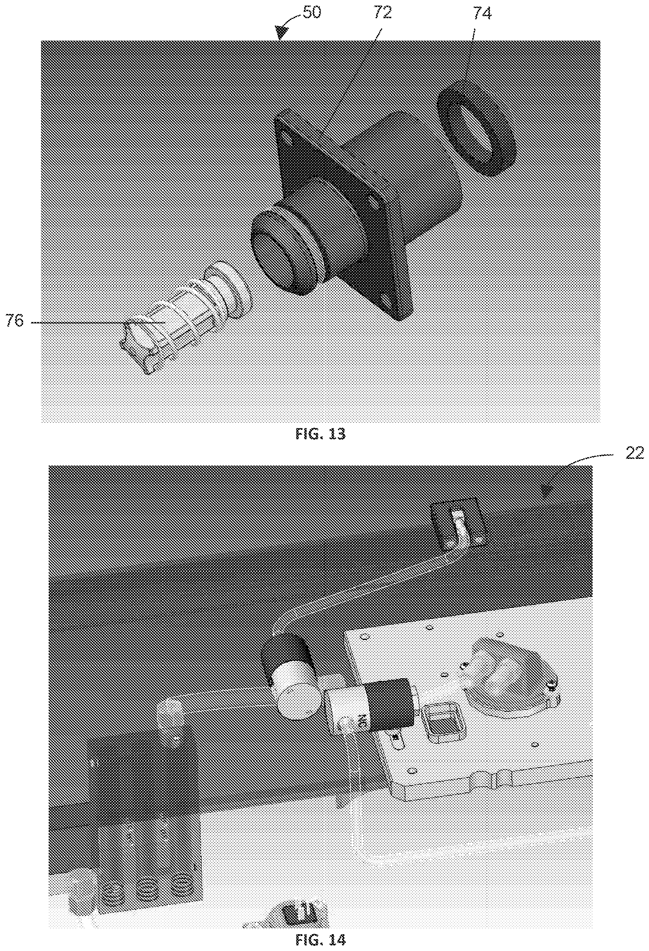

Figure 6 shows one embodiment of a coffee maker water heating system 10. When a user initiates a signal that hot water is desired (e.g., when the coffee maker is activated to brew coffee or when the hot water outlet is activated to dispense hot water for a cut of tea, for example), the pump 16 delivers water through the same heating assembly 14 for a final heating step to bring the water to a raised temperature. This time, however, rather than delivering the water back to the reservoir 12, the system delivers the water to a dispensing conduit area 20. Dispensing conduit area 20 is governed by a three-way valve 22. The three-way valve 22 may be closed to prevent flow of water past the valve, opened to direct water into the reservoir loop, or opened to direct water to one of the desired outlets. The valve 22 may be controlled by an automatic controller that indicates how water should be directed. One example of a potential valve system is illustrated in Figure 14. The controller may have the reservoir option set as the default and cause the valve to switch upon an indication that hot water is needed. When the controller is in the "stand-by" mode, it monitors and maintains temperature in the reservoir and circulates the water through the heater assembly 14 as necessary to accomplish the desired temperature. There are many optional ways that the controller can be programmed, two examples of which are: the pump may be left running and the heater is only turned on/off as needed to maintain the temperature, or the pump may be in a default "off' position and only run when the heater is on. One benefit to leaving the pump running is that more accurate temperature measurements can be made and the control system can be simplified (although a continuously running pump does add to the power consumption of the system, as well as wear on the pump component). More detailed controller logic may be written and developed if desired.

Immediately preceding the three-way valve 22 in the water flow path is a temperature sensor 24. This temperature sensor 24 is provided in order to confirm that the water is at the desired temperature prior to being dispensed. It may be related to the valve 22 such that if the water is not at the set temperature, even if the water dispense request has been activated, the water may be re-routed to flow through the water flow loop (i.e. back into the reservoir), rather than dispensed. This may happen when the heater assembly 14 is heating up, which may take a few seconds, and the goal is to prevent water from being dispensed until it is the proper temperature. Once the temperature sensor 24 detects that water is of the desired temperature, the three-way valve 22 opens and allows the water to pass to the dispensing conduit area 20.

Referring now to Figures 1-3, the dispensing conduit area 20 is shown as having two dispensing outlets, although more or fewer outlets may be provided. (Figure 6 illustrates a single outlet.) In one embodiment, there is a hot water outlet 26 and a brew outlet 28. The hot water outlet 26 may be used to dispense hot water for tea, hot cocoa, or for any other use that requires hot/warmed water. The brew outlet 28 may be connected to a beverage maker in order to deliver hot water for brewing coffee, espresso, or any other brewed beverage. The outlets may be governed by one or more valves that allow the dispensing of hot water as desired. The valves may be automatic or manual valves.

In a first embodiment, the joint at which the water would split between the outlets is governed by a three-way valve 30. This valve either closes the dispensing conduit area 20 to delivery of water (while the water is being warmed through the loop system or when the system is not in use), causes water to flow toward the hot water outlet 26, or causes water to flow toward the brew head outlet 28. In an alternate embodiment, the individual outlets may be governed by their own 2-way valve. For example, in the alternate option shown, the hot water outlet 26 may have a 2-way valve 32 that either causes no flow of water or allows water to flow out the outlet when the water request has been made. The brew head water outlet 28 may have a 2-way valve 34 that either causes no flow of water or allows water to flow out the outlet and to the beverage maker when the water request has been made. (Although both options are shown on the figures, it should be understood that only a single 3-way valve 30 or two separate end valves (26, 28) need be used.)

Once the desired amount of water has been dispensed, the reservoir 12 maybe automatically replenished via the aircraft potable water system or manually replenished using pre-packaged water or water from a faucet. The embodiment shown in Figure 2 illustrates a system 10 that is filled via the pressurized tank of the aircraft via a water fill system 40. Water fill system 40 may feature a water pipe 42 that directs water from an external water source, such as a potable water tank on-board an aircraft or train or other vehicle, to the reservoir 12. The water inflow can be directed by a water inlet valve 44, which is activated when the water level in the reservoir is low and needs to be filled. Water sensors are generally provided that can detect water levels and indicate when a fill step should be activated. (Certain embodiments of water sensors for use in connection with the removable tank option are described below, but any type of appropriate sensor may be used, particularly if the removable tank option is not incorporated into the water flow aspects of the invention.)

The system 10 may also feature an optional flow meter 36, which measures water flow through the heating system. This information is used as an input in the system controller to so that the selected amount of hot water is delivered, as well as for equipment diagnostics (e.g., to test pump failure, detect system clogs, and so forth). Additionally, a second temperature sensor 38 may be provided in the flow path of the water. This sensor 38 may be provided in a location so as to measure the temperature of the water as it leaves the reservoir 12, which can indicate to the system how much the water is being heated after its pass through the heater assembly 14, can indicate to the system when the water in the reservoir is in the desired range so that the pump can stop circulating water through the system, or for any other number of functions. For example, there will be some heat loss as the water flows through the system, so the temperature sensor 38 can help detect how much heat is being lost per unit time.

Another feature of the hot water heater system 10 is that the water reservoir 12 may be designed to be removable from the unit to allow the reservoir 12 to be cleaned and/or replaced if necessary. Previous water heating/coffee maker designs have used an unmovable, fixed mounted tank. A fixed tank has the disadvantage that the unit must completely disassembled for cleaning and maintenance of the tank. The removable reservoir embodiment of this invention improves the sanitation and reliability of the equipment by making the reservoir removable and accessible for cleaning, maintenance, and filling directly. The removable reservoir is an optional feature that may be provided with the water heating system 10 described above, or a removable tank may be provided with a traditional immersion or flow-through heating system.

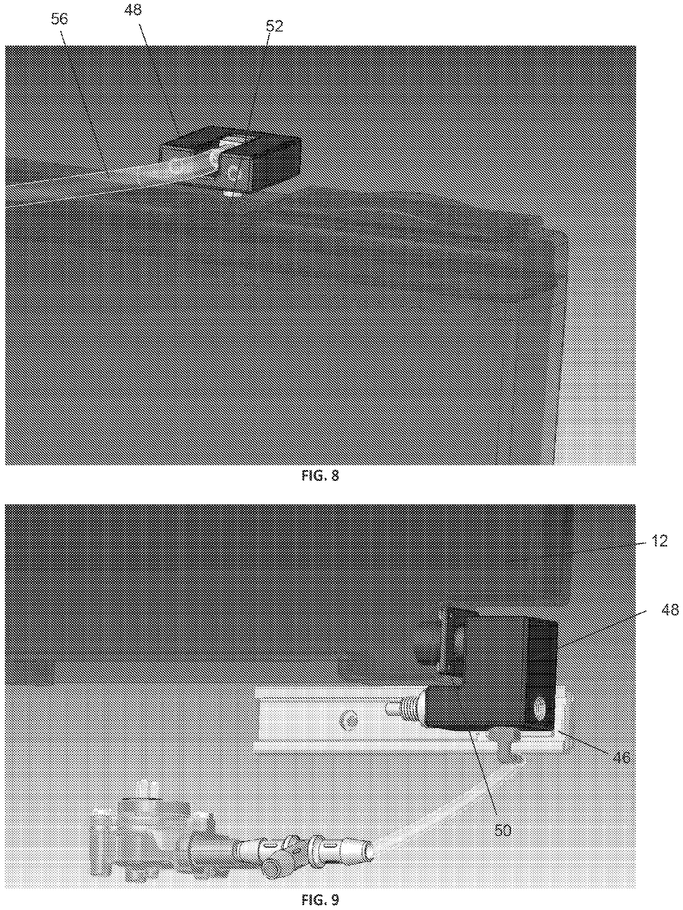

The removable reservoir embodiment generally provides a reservoir 12 that is insertable and removable from an outer housing 46. One example of such a reservoir 12 is shown in Figures 7 and 8. In order to create such a removable reservoir 12, it is first necessary to provide the water level sensors 48 that are external to the reservoir 12. Traditional water heating/ coffee maker designs use in-tank contact sensors or float systems to detect low and high water levels. These submerged contact level sensors have the disadvantage that they create the need for an electrical or mechanical connection to the tank. The sensors 48 used in the current system are not in contact with the reservoir 12, but instead, liquid level sensing is conducted by the use of non-contact capacitive sensors 48 used to detect low water level. Sensors 48 are located outside the reservoir 12 with no electrical or mechanical connection to the tank, but they can sense the water levels in the reservoir in order to indicate when water should be added, when water is so low that the water flow process/heating should be stopped, or when the water is high enough that the pressurized water in flow should be stopped. The sensors may activate audible or visual alarms to indicate low water, if desired. The non-contact capacitive sensor(s) are also used to detect high water level. If high water level is detected, the aircraft potable water inlet valve 44 is inactivated (and an indication of a full water level maybe provided to the user, via an audible or visual indicia on the system face).

One example of such external, non-contact sensors may be capacitive level sensors, and exemplary sensors are manufactured by Gems™ Sensors and Controls. As shown in Figures 1-3, the sensors 48 are generally positioned with one being near the top of the reservoir and one being near the lower area of the reservoir 12, but the sensors 48 are associated with the housing 40 into which the reservoir is positioned, and not the reservoir 12 itself. They may be secured to the housing, but positioned so that they directly abut the reservoir when it is positioned. By not having sensors directly connected to the reservoir, there are fewer items to be disconnected and reconnected when the reservoir is moved.

The reservoir is also connected to water conduits 18 via one or more poppet valves 50. The one or more poppet valves 50 are positioned at conduit connection areas, such that water is allowed to flow between the reservoir 12 and the conduit 18 when the valve seat is open, but that stops the flow of water when the reservoir 12 is removed from the housing 46. These valves act much like the valves on a humidifier, which allows the humidifier water basin to be removed, preventing the flow of water out of the basin, so that the basin can be filled and replaced. When the basin is replaced, the poppet valve allows a water flow connection to be reestablished. For manual filling, the reservoir 12 is either partially removed (e.g., it can be slid out) or completely removed for filling via an opening or water fill access port 52 in the top, and then returned to the unit for catering. Removal of the reservoir also serves for cleaning if needed. An optional debris screen 53 may be positioned at the access port 52 to prevent debris from entering the reservoir.

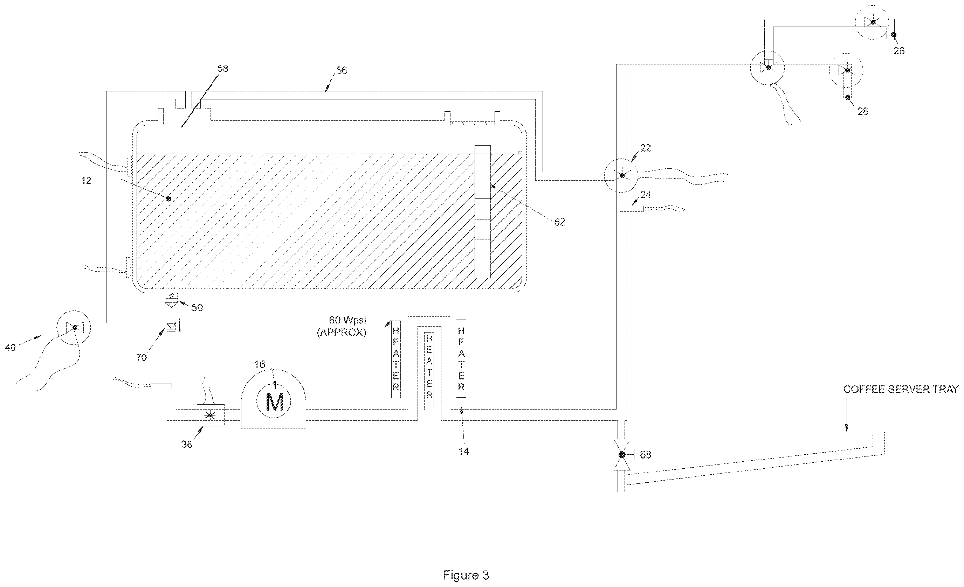

Figures 1 and 2 show a first poppet valve 50a at the water exit port 54, where the water exits the reservoir to enter the heating loop, and a second poppet valve 50b where the water reenters the reservoir. Figures 3 and 7-9 show an alternate embodiment in which the second poppet valve is not required because water reenters the reservoir 12 through a return line 56 that branches from the 3-way valve 22 and directs water into the reservoir at water intake opening 58. Figure 7 shows a potential location of a single poppet valve 50, and Figure 9 shows a poppet valve 50 connecting the reservoir 12 to a level sensor 48 that is associated with the unit housing 46. (However, the poppet valve 50 may be used to connect the reservoir directly to the unit housing 46, with the level sensor positioned alongside the reservoir once it has been positioned.) Figure 3 shows that water can be delivered from the water fill system 40 of the vehicle pressurized tank into the water intake opening 58 as well.

Figure 13 illustrates one particular embodiment of a specific poppet valve 50 that has been designed for a removable water reservoir 12. The valve 50 includes an abutment face 72, which interfaces with the reservoir and a replaceable filter 74 to prevent heating system contamination. Such a valve may also be useful on other systems that use poppet valves, such as similar reservoirs on humidifiers and other types of coffee makers that have removable reservoirs. An internal spring seat 76 helps ensure that water does not leak when the reservoir is removed.

The external surface of the reservoir may include a sight gauge 62 integrated into the reservoir 12 for the user to monitor water level. Alternatively, the reservoir may be clear so that easy viewing of the water level is available. The absence of any sensors or heaters within the reservoir, and the use of the external level sensors 48 and poppet valves 50 at the interface allow for easy removal of the reservoir 12. The design provides all level and temperature sensing positioned in the fluid path--outside the reservoir not within the reservoir.

The figures also show a manual drain 68, which can allow the conduits 18 to be completely drained, which is particularly important for systems on-board aircraft, which can be subject to freezing water in any of the system's lines.

The figures also show an optional check valve 70, which may be used to prevent hot water from flowing back into the pump 16 (as shown in Figures 1 and 2) or that could be used to prevent water from flowing back into the reservoir prior to passing through the heater assembly 14 (as shown in Figure 3).

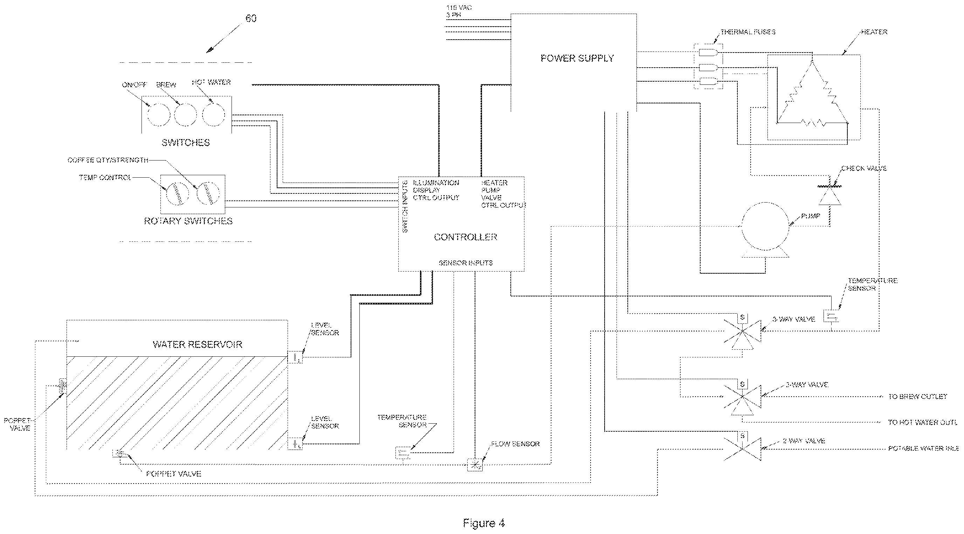

Figure 4 illustrates one example of the electrical schematic of the system 10. The user interface 60 may have a series of input options controlled by buttons, knobs, rotary switches, or any other appropriate interface. The commands are relayed to a controller that directs the power supply, various sensors and fuses, the pumps, and valves.

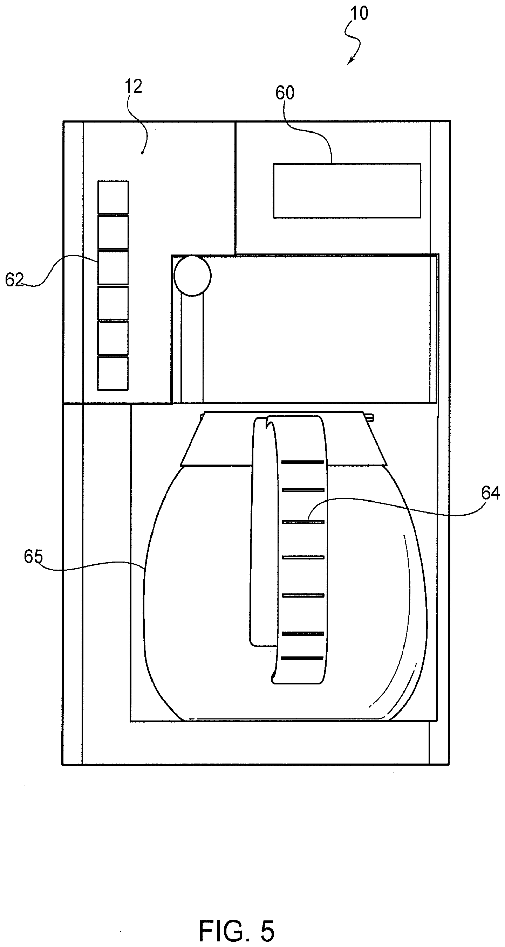

Another beneficial feature that may be incorporated into the system 10 is providing a carafe with a sight gauge. Traditional airline coffee pots are made from stainless steel and do not include a sight gauge or water level viewing for the user. This has the disadvantage that the user does not know the quantity of beverage in the pot until s/he removes it from the equipment and looks inside from the top opening of the pot. This has contributed to spills and improper use of the equipment, such as preparing a pot of coffee before emptying the pot from the previous cycle. Accordingly, as shown in Figure 5, one embodiment of the present invention provides a liquid level viewing window 64 on the side of the stainless steel carafe 66.

## Claims

1. A unit (46) housing of a water heating system (10) for a beverage maker said water heating system (10) comprising:
(a) a water reservoir (12);
(b) an in-line flow-through heater assembly (14);
(c) a pump (16) for moving water through a water flow path from the reservoir (12) through the heater assembly (14) and either (i) back to the reservoir (12) or (ii) to a brew outlet (28) or hot water outlet (26);
(d) a temperature sensor (38) positioned after the heater assembly (14) in the water flow path; and
(e) a valve (22) positioned after the temperature sensor (38) in the water flow path for delivering water either (i) back to the reservoir (12) or (ii) to the brew outlet (28) or the hot water outlet (26);
**characterised in that** the unit (46) further comprises:
at least one external non-contact water level sensor (48) is positioned outside of the reservoir (12) so as to detect low and high water levels within the reservoir (12); wherein the at least one external non-contact water level sensor (48) is secured to the unit (46) so as to permit the water reservoir (12) to be removable from the unit that houses the water heating system (10).

2. The unit (46) of claim 1, wherein the at least one external non-contact water level sensor (48) is a capacitive water level sensor.

3. The unit (46) of claim 1 or 2, wherein water is recirculated from the water reservoir (12) through the heater assembly (14) and back to the reservoir (12) in order to maintain water in the reservoir (12) at a desired holding temperature.

4. The unit (46) of claim 3, wherein the desired holding temperature comprises the dispense temperature.

5. The unit (46) of any of the preceding claims, wherein water to be dispensed from the system (10) flows from the water reservoir (12), through the heater assembly (14), through the temperature sensor (38), and if the temperature sensor (38) determines that the water is at the desired dispensing temperature, through the valve (22) and either to the brew outlet (28) or to the hot water outlet (26).

6. The unit (46) of any of the preceding claims, further comprising one or more valves (30, 32, 34) for delivering water to the brew outlet (28) or to the hot water outlet (26).

7. The unit (46) of any of the preceding claims, wherein the hot water outlet (26) comprises a dispensing valve (32) and wherein the brew outlet (28) comprises a dispensing valve (34).

8. The unit (46) of any of the preceding claims, further comprising a water fill system (40) that allows filling of the water reservoir (12) directly from a water source.

9. The unit (46) of claim 8, wherein the water source comprises a potable water tank on-board an aircraft.

10. The unit (46) of any of the preceding claims, further comprising one or more poppet valves (50, 50a, 50b) that connect the reservoir (12) to water conduits that deliver water through the system.

11. The unit (46) any of the preceding claims, wherein the reservoir (12) comprises a sight gauge (62).

12. The unit (46) of any of the preceding claims, further comprising a carafe (65, 66) that has a liquid level viewing window (64).

13. The unit (46) of any of the preceding claims, wherein the valve (22) is a three-way valve positioned after the temperature sensor (38) in the water flow path for delivering water either (i) back to the reservoir (12) or (ii) to the brew outlet (28) or the hot water outlet (26).

14. The unit (46) of any of the preceding claims, further comprising a check valve (70) for preventing hot water from flowing back into the pump (16).

## Patentansprüche

1. Eine Einheit (46), in der ein Wasserheizsystem (10) für einen Getränkezubereiter untergebracht ist, wobei das Wasserheizsystem (10) umfasst:
(a) einen Wasservorratsbehälter (12);
(b) eine in Reihe geschaltete Durchlauferhitzeranordnung (14);
(c) eine Pumpe (16) zum Bewegen von Wasser durch einen Wasserströmungspfad von dem Vorratsbehälter (12) durch die Erhitzeranordnung (14) und entweder (i) zurück zum Vorratsbehälter (12) oder (ii) zu einem Brühauslass (28) oder einem Heißwasserauslass (26);
(d) einen Temperatursensor (38), der nach der Erhitzeranordnung (14) im Wasserströmungspfad angeordnet ist; und
(e) ein Ventil (22), das nach dem Temperatursensor (38) im Wasserströmungspfad angeordnet ist, um Wasser entweder (i) zurück in den Vorratsbehälter (12) oder (ii) zum Brühauslass (28) oder zum Heißwasserauslass (26) zu liefern;
**dadurch gekennzeichnet, dass** die Einheit (46) weiterhin umfasst:
mindestens einen externen kontaktlosen Wasserstandsensor (48), der außerhalb des Vorratsbehälters (12) so angeordnet ist, dass niedrige und hohe Wasserstände innerhalb des Vorratsbehälters (12) erfasst werden; wobei der mindestens eine externe kontaktlose Wasserstandsensor (48) so an der Einheit (46) befestigt ist, dass der Wasservorratsbehälter (12) aus der Einheit, die das Wasserheizsystem (10) beherbergt, entnommen werden kann.

2. Die Einheit (46) gemäß Anspruch 1, wobei der mindestens eine externe kontaktlose Wasserstandsensor (48) ein kapazitiver Wasserstandsensor ist.

3. Die Einheit (46) gemäß Anspruch 1 oder 2, wobei Wasser aus dem Wasservorratsbehälter (12) durch die Erhitzeranordnung (14) und zurück zum Vorratsbehälter (12) rezirkuliert wird, um Wasser in dem Vorratsbehälter (12) auf einer gewünschten Haltetemperatur zu halten.

4. Die Einheit (46) gemäß Anspruch 3, wobei die gewünschte Haltetemperatur die Abgabetemperatur umfasst.

5. Die Einheit (46) gemäß irgendeinem der vorhergehenden Ansprüche, wobei das aus dem System (10) abzugebende Wasser aus dem Wasservorratsbehälter (12) durch die Erhitzeranordnung (14) durch den Temperatursensor (38) und, wenn der Temperatursensor (38) erfasst, dass das Wasser die gewünschte Abgabetemperatur hat, durch das Ventil (22) und entweder zum Brühauslass (28) oder zum Warmwasserauslass (26) fließt.

6. Die Einheit (46) gemäß irgendeinem der vorhergehenden Ansprüche, weiterhin umfassend ein oder mehrere Ventile (30, 32, 34) zum Zuführen von Wasser zum Brühauslass (28) oder zum Heißwasserauslass (26).

7. Die Einheit (46) gemäß irgendeinem der vorhergehenden Ansprüche, wobei der Heißwasserauslass (26) ein Abgabeventil (32) umfasst und wobei der Brühauslass (28) ein Abgabeventil (34) umfasst.

8. Die Einheit (46) gemäß irgendeinem der vorhergehenden Ansprüche, ferner umfassend ein Wasserfüllsystem (40), das das Befüllen des Wasservorratbehälters (12) direkt von einer Wasserquelle ermöglicht.

9. Die Einheit (46) gemäß Anspruch 8, wobei die Wasserquelle einen Trinkwassertank an Bord eines Flugzeugs umfasst.

10. Die Einheit (46) gemäß irgendeinem der vorhergehenden Ansprüche, weiterhin umfassend ein oder mehrere Tellerventile (50, 50a, 50b) die den Vorratsbehälter (12) mit Wasserleitungen verbinden, die Wasser durch das System liefern.

11. Die Einheit (46) gemäß irgendeinem der vorhergehenden Ansprüche, wobei der Vorratsbehälter (12) eine Sichtanzeige (62) umfasst.

12. Die Einheit (46) gemäß irgendeinem der vorhergehenden Ansprüche, weiterhin umfassend eine Karaffe (65, 66), die ein Sichtfenster (64) für den Flüssigkeitspegel aufweist.

13. Die Einheit (46) gemäß irgendeinem der vorhergehenden Ansprüche, wobei das Ventil (22) ein Dreiwegeventil ist, das nach dem Temperatursensor (38) im Wasserströmungspfad angeordnet ist, um Wasser entweder (i) zurück in den Vorratsbehälter (12) oder (ii) zum Brühauslass (28) oder zum Heißwasserauslass (26) zu liefern.

14. Die Einheit (46) gemäß irgendeinem der vorhergehenden Ansprüche, weiterhin enthaltend eine Rückflusssperre (70), um zu verhindern, dass heißes Wasser zurück in die Pumpe (16) zurückfließt.

## Revendications

1. Unité (46) logeant un système de chauffe-eau (10) pour un appareil pour préparer une boisson, ledit système de chauffe-eau (10) comprenant :
(a) un réservoir d'eau (12) ;
(b) un ensemble de dispositif de chauffage à écoulement traversant en ligne (14) ;
(c) une pompe (16) pour déplacer l'eau à travers une trajectoire d'écoulement d'eau du réservoir (12) en passant par l'ensemble de dispositif de chauffage (14) et (i) revenir vers le réservoir (12) ou bien (ii) vers une sortie d'infusion (28) ou une sortie d'eau chaude (26) ;
(d) un capteur de température (38) positionné après l'ensemble de dispositif de chauffage (14) dans la trajectoire d'écoulement d'eau ; et
(e) une valve (22) positionnée après le capteur de température (38) dans la trajectoire d'écoulement d'eau pour ramener l'eau (i) dans le réservoir (12) ou (ii) dans la sortie d'infusion (28) ou la sortie d'eau chaude (26) ;
**caractérisé en ce que** l'unité (46) comprend en outre :
au moins un capteur de niveau d'eau sans contact externe (48) qui est positionné à l'extérieur du réservoir (12) afin de détecter des niveaux d'eau bas et haut à l'intérieur du réservoir (12) ; dans lequel le au moins un capteur de niveau d'eau sans contact externe (48) est fixé sur l'unité (46) afin de permettre au réservoir d'eau (12) d'être retiré de l'unité qui loge le système de chauffe-eau (10).

2. Unité (46) selon la revendication 1, dans lequel le au moins un capteur de niveau d'eau sans contact externe (48) est un capteur de niveau d'eau capacitif.

3. Unité (46) selon la revendication 1 ou 2, dans laquelle l'eau est recirculée du réservoir d'eau (12) en passant par l'ensemble de dispositif de chauffage (14) et en revenant au réservoir (12) afin de maintenir l'eau dans le réservoir (12) à une température de maintien souhaitée.

4. Unité (46) selon la revendication 3, dans laquelle la température de maintien souhaitée comprend la température de distribution.

5. Unité (46) selon l'une quelconque des revendications précédentes, dans laquelle l'eau à distribuer à partir du système (10) s'écoule à partir du réservoir d'eau (12), en passant par l'ensemble de dispositif de chauffage (14) et en passant par le capteur de température (38), et si le capteur de température (38) détermine que l'eau est à la température de distribution souhaitée, elle passe par la valve (22) et la sortie d'infusion (28) ou la sortie d'eau chaude (26).

6. Unité (46) selon l'une quelconque des revendications précédentes, comprenant en outre une ou plusieurs valves (30, 32, 34) pour distribuer l'eau à la sortie d'infusion (28) ou à la sortie d'eau chaude (26) .

7. Unité (46) selon l'une quelconque des revendications précédentes, dans laquelle la sortie d'eau chaude (26) comprend une valve de distribution (32) et dans laquelle la sortie d'infusion (28) comprend une valve de distribution (34).

8. Unité (46) selon l'une quelconque des revendications précédentes, comprenant en outre un système de remplissage d'eau (40) qui permet le remplissage du réservoir d'eau (12) directement à partir d'une source d'eau.

9. Unité (46) selon la revendication 8, dans laquelle la source d'eau comprend un réservoir d'eau potable à bord d'un avion.

10. Unité (46) selon l'une quelconque des revendications précédentes, comprenant en outre un ou plusieurs distributeurs à clapet (50, 50a, 50b) qui raccordent le réservoir (12) aux conduits d'eau qui distribuent l'eau dans le système.

11. Unité (46) selon l'une quelconque des revendications précédentes, dans laquelle le réservoir (12) comprend une jauge visuelle (62).

12. Unité (46) selon l'une quelconque des revendications précédentes, comprenant en outre une carafe (65, 66) qui a une fenêtre d'observation de niveau de liquide (64).

13. Unité (46) selon l'une quelconque des revendications précédentes, dans laquelle la valve (22) est une valve à trois voies, positionnée après le capteur de température (38) dans la trajectoire d'écoulement d'eau pour ramener l'eau (i) dans le réservoir (12) ou (ii) dans la sortie d'infusion (28) ou la sortie d'eau chaude (26).

14. Unité (46) selon l'une quelconque des revendications précédentes, comprenant en outre un clapet anti-retour (70) pour empêcher l'eau chaude de refouler dans la pompe (16).
